## Europäisches Patentamt

## European Patent Office

## Office européen des brevets

(11) Veröffentlichungsnummer: **0 000 402**
**B1**

(12) **EUROPÄISCHE PATENTSCHRIFT**

(45) Veröffentlichungstag der Patentschrift: 08.07.81

(51) Int. Cl.³: **C 04 B 43/02, C 04 B 41/24**

(21) Anmeldenummer: 78100410.6

(22) Anmeldetag: 17.07.78

(54) Verfahren zur Herstellung von Isolierbauplatten.

(30) Priorität: 18.07.77 DE 2732387

(43) Veröffentlichungstag der Anmeldung:
24.01.79 Patentblatt 79/2

(45) Bekanntmachung des Hinweises auf die Patenterteilung:
08.07.81 Patentblatt 81/27

(84) Benannte Vertragsstaaten:
BE CH DE FR GB LU NL SE

(56) Entgegenhaltungen:
BE - A - 624 215
DE - A - 2 100 922
DE - A - 2 311 816
DE - B - 1 252 571
US - A - 3 286 785

(73) Patentinhaber: SAINT-GOBAIN INDUSTRIES
62, Bd Victor Hugo
F-92209 Neuilly sur Seine (FR)
(73) Patentinhaber: Grünzweig + Hartmann und
Glasfaser AG
Bürgermeister Grünzweig Strasse 1-47
D-6700 Ludwigshafen (DE)

(72) Erfinder: Schirmeisen, Josef, Dipl.-Ing.
Deidesheimer Strasse 6
D-6704 Mutterstadt (DE)
Erfinder: Schweikert, Heinz, Dipl.-Chemiker, Dr.
Karl Bröger-Strasse 16
D-6700 Ludwigshafen (DE)
Erfinder: Thebesius, Max
Im Krükel 19
D-6701 Hochdorf-Assenheim (DE)

(74) Vertreter: Betzler, Eduard, Dipl.-Phys. et al,
Eisenacher Strasse 17
D-8000 München 40 (DE)

## Verfahren zur Herstellung von Isolierbauplatten

Die Erfindung bezieht sich auf ein Verfahren zur Herstellung von Isolierbauplatten und geht aus von einem Verfahren, bei dem eine mit einem organischen Bindemittel auf Kunststoffbasis vorgebundene Mineralfaserplatte mit einer wässrigen Aufschlämmung aus einem anorganischen Bindemittel getränkt und anschließend warm getrocknet wird.

Unter Isolierplatte soll dabei allgemein eine wärme-und/oder schallisolierende Platte verstanden werden, die gegebenenfalls auch als Brandschutzplatte verwendbar ist.

Bei einem solchen Verfahren, wie es beispielsweise aus der US—A 3 551 276 bekannt geworden ist, finden Suspensionen aus tonmineralischen Stoffen, wie Bentonit und/oder Kaolin bzw. Ball-Clay in Kombination mit Borsäure zum Imprägnieren von mit Phenolharzen bzw. Wasserglas oder mit kolloidalem $SiO_2$ vorgebundenen Glasfaserfilzen oder-platten mit Dichten von 0,08 bis 0,14 g/cm³ Verwendung. Außerdem können den anorganischen Bindemitteln noch inerte Füllstoffe in Form von Prophyllit sowie Hydrophobierungsmittel vorwiegend auf Silikonbasis zugegeben werden. Die derartig imprägnierten Glasfaserkörper werden getrocknet und bei Temperaturen zwischen 218 und 288°C gehärtet.

Ein ähnliches Verfahren läßt sich auch aus der DE—B—1 619 131 entnehmen. Die bekannten Verfahren erstreben insbesondere die Erzeugung von Mineralfaserprodukten mit hoher Temperaturbeständigkeit. Gegebenenfalls kann nach der Lehre der US—A—3 551 276 den aus Bentonit, Kaolin und/oder Ball-Clay sowie Borsäure bestehenden Imprägnierbindemitteln ein Hydrophobiermittel auf Silikonbasis zugesetzt werden, wobei anschließend eine Trocknung des imprägnierten Formkörpers bei ca. 240°C erfolgt. Diese Zugabe dient dann zur Erzielung einer ausreichenden Feuchtigkeitsbeständigkeit der Produkte.

Solche Isolierbauplatten haben jedoch nur ein beschränktes Einsatzgebiet, weil sie nicht die im allgemeinen erforderliche hohe mechanische Festigkeit aufweisen. Isolierbauplatten mit den geforderten hohen mechanischen Festigkeitswerten lassen sich nur in Form von Asbest-Silikatplatten herstellen, wobei Asbestfasern, hydraulische Zemente oder Calciumhydroxid mit Zusätzen von Quarzmehl oder anderen silikatischen Stoffen mit Wasser zuerst zu einer Maische verrührt werden. Dieser Brei wird dann entwässert und der so erhaltene Filterkuchen gepreßt und hydrothermal gehärtet. Die Biegefestigkeiten solcher Platten betragen bei Plattendichten von 0,65 bis 0,8 g/cm³ zwischen 4,9 und 9,8 N/mm². Die Druckfestigkeiten liegen im Bereich von 2,9 bis 6,9 N/mm².

Solche Platten weisen jedoch schwerwiegende Nachteile auf. Da solche Platten im allgemeinen bearbeitet, d. h. gesägt, gefräst oder geschliffen werden müssen, werden bei diesem Bearbeitungsvorgang sehr feine Asbestfasern in die Luft frei, die gesundheitsschädlich sind, weil sie krebsartige Erkrankungen der Atemwege hervorrufen können. In einigen Staaten ist deshalb die Anwendung solcher Isolierbauplatten bereits verboten.

Darüber hinaus führen diese Platten auch nicht zu einer ausreichenden Temperaturbeständigkeit, weil das verwendete Calciumhydrosilikat nur eine Temperaturbeständigkeit von ca. 400°C aufweist. Bei höheren Temperaturen nimmt die mechanische Festigkeit solcher Isolierbauplatten ab und es kann zu Rissebildung in der Platte kommen.

Schließlich enthalten diese Platten auch noch einen beachtlichen Anteil an wasserlöslichen, zum Teil stark alkalischen Substanzen, so daß es bei Einwirkung von Feuchtigkeit zu Salzausblühungen an der Oberfläche der Platten kommen kann.

Zum Stande der Technik gehört ferner nach der US—A—2 717 841 ein Verfahren zur Herstellung einer Isolierplatte für Wand- und Deckenkonstruktionen mit flammenhemmenden Eigenschaften. Nach diesem Verfahren wird eine mit Kunststoffbindemittel vorgebundene Glasfaserschicht mit einer Dichte von 0,11 g/cm³ zuerst mit einer anorganischen Binderaufschlämmung, bestehend aus hydraulischen Zementen oder Gips, vorzugsweise jedoch aus Magnesiumoxidchlorid-Zement (Sorel-Zement) getränkt. Nachdem der Überschuß der Bindersuspension abgesaugt ist, wird die feuchte Platte bei 232°C getrocknet. Das erhaltene Erzeugnis hat eine Dichte von 0,28 bis 0,3 g/cm³. Die Dichte kann bis zu einem Wert von 0,5 g/cm³ gesteigert werden. Auch diese Platte erfüllt jedoch nicht die Forderungen, die hinsichtlich Druck- und Biegefestigkeit bereits von einer Asbest-Silikatplatte erreicht werden.

Hier will die Erfindung Abhilfe schaffen. Die Erfindung wie sie in den Ansprüchen gekennzeichnet ist, löst die Aufgabe ein Verfahren anzugeben, mit dem es möglich ist, die Druck- und Biegefestig-keitswerte von Asbest-Silikatplatten zu überschreiten, ohne die negativen Eigenschaften der mit Zement gebundenen Asbest-Faserplatten in Kauf nehmen zu müssen.

Aus der BE—A—624 215 ist bereits ein Verfahren zur Herstellung von formbeständigen keramischen Gegen-ständen erheblicher Flächenabmessung, aber geringer Stärke bekannt. Dazu wird ein vorgeformtes Mineralfaserflies mit einem keramischen Material imprägniert und dieses imprägnierte

Mineralfaserflieβ bis über die Transformations-temperatur und zwar zwischen 871 und 1093°C erhitzt.

Von diesem Verfahren unterscheidet sich das Verfahren nach der Erfindung dadurch, daβ

1) von einer Platte ausgegangen wird, die aus einem mit einem organischen Bindemittel vorgebundenen Mineral-faservlies entstanden ist.
2) diese Platt mit einer wässrigen Aufschlämmung eines Bindetones vorgegebener Teilchengröβe imprägniert wird und
3) nur auf eine Temperatur unterhalb des Transformations-punktes erhitzt wird.

Beim erfindungsgemäβen Verfahren wird also bewuβt von einer mit organischen Bindemitteln gebundenen Mineralfaserplatte ausgegangen, deren Dichte bereits möglichst hoch gewählt wird. Das führt zu dem Vorteil, daβ diese Platte während des Imprägnier- und Trockenvorgangs bereits eine gute Dimensionsstabilität erhält. Auβerdem wirkt sich ein derart hoher Verdichtungsgrad der Ausgangsfaserplatte durch das günstige Verhältnis von Faseranteil zu Bindeton in besonders vorteilhafter Weise ganz erheblich auf die Erreichung der geforderten Festigkeitseigenschaften des Endproduktes aus, das nicht nur ausgezeichnete Druck- und Biegefestigkeit aufweist, sondern auch eine überragende Spaltfestigkeit. Ein weiterer Vorteil ergibt sich dadurch, daβ der Elastizitäsmodul dieses Produktes günstig beeinfluβt wird.

Der für die Imprägnierung der Mineralsfaserplatte verwendete Bindeton, der eine geringe Korngröβe von mindestens ca. 80%, vorzugsweise 90 Gew.-% unterhalb von 2 $\mu$m aufweisen muβ, wird zweckmäβig nach folgenden Gesichtspunkten ausgewählt:
—das Bindevermögen des Tones muβ, damit die geforderten Plattenfestigkeiten erreicht werden können, sehr hoch sein, die Trockenbiegefestigkeit des Bindetones sollte, gemessen nach DIN 51030, nicht weniger als 2,9 N/mm² betragen;
—der Restkornanteil von 10 bis 20 Gew.-% darf nicht mehr als zur Hälfte über 15 $\mu$m liegen;
—das Strukturwasser, das als OH-Gruppen im Kristallgitter des Tones eingebaut ist, muβ im Temperaturbereich von 400 bis 600°C abgespalten werden. Dadurch verliert der Ton seine Redispergierbarkeit in Wasser und die Tonbindung in der Platte wird wasserunempfindlich.

Nach einer Reihe von untersuchten tonmineralischen Stoffen haben sich Fein- und Kolloidtone aus sekundären Lagerstätten als am besten geeignet erwiesen.

Vorzugsweise bestehen diese Tone hauptsächlich aus folgenden Mineralien:

25 bis 80 Gew.-% Kaolinit

0 bis 50 Gew.-% Illit und Serizit

10 bis 37 Gew.-% Quarz.

Die chemische Zusammensetzung der Tone schwankt im Bereich folgender Gewichtsanteile:

48 —62 Gew.% $SiO_2$

25 —35 Gew.-% $Al_2O_3$

0,8— 2 Gew.-% $TiO_2$

0,8— 2,2 Gew.-% $Fe_2O_3$

0,6— 2 Gew.-% $CaO$

0,4— 1,5 Gew.-% $MgO$

0,5— 2,5 Gew.-% $K_2O$

0,1— 1,5 Gew.-% $Na_2O$

5 —15 Gew.-% organische Stoffe und Kristallwasser.

Durch die erfindungsgemäβ vorgesehene Temperaturbehandlung im Bereich zwischen 400°C und dem der Transformationstemperatur der für die Herstellung der vorgebundenen Mineralfaserplatte verwendeten Mineralfasern wird eine vollständige Wasserbeständig-keit der Isolierbauplatte erreicht. Gleichzeitig werden durch die Temperaturbehandlung die brennbaren organischen Bestandteile, die in Form von Harzen, Schmälzölen, Netz- und Dispergierhilfsmitteln bei der Herstellung der Mineralfaser-Ausgangsplatte bzw. Imprägnierungsprozeβ mit der Tonsuspension in die Platte gelangt sind, zum groβen Teil wieder herausgetrieben.

Das Endprodukt kann nicht nur nicht mehr entflammen, sondern auch nicht mehr glühen und ist damit nach DIN 4102 als ein absolut unbrennbares Material anzusehen.

Vorzugsweise verwendet man bei dem erfindungsgemäβen Verfahren als Ausgangsmaterial für die Mineralfaserplatte ein solches mit maximalen Faserdurchmessern von 6 $\mu$m. Bei Einsatz von gröberen Fasern mit einem Durchmesser von über 6 $\mu$m läβt sich zwar die Tonsuspension in die Faserplatte leichter einbringen, da die Faserhohlräume in der Platte relativ groβ sind und somit auch bei Verwendung von grobkörnigen Tonen beim Imprägnieren einer solchen Platte kein Filtereffect zu befürchten ist, die erzielten Endfestigkeiten insbesondere die Spaltfestigkeit einer derart hergestellten Mineralfaserplatte sind jedoch wesentlich geringer als bei einer vergleichbaren Platte, deren Ausgangsmaterial aus feineren Fasern besteht. Der Grund ist wohl darin zu sehen, daß grobe Fasern beim Herstellungsprozeß der Ausgangsplatte sich weit mehr in Schichten ablagern als das bei feinen Fasern der Fall ist, und der Verfilzungsgrad grobfasriger Schichten untereinander wesentlich schlechter ist als bei Platten aus feineren Fasern.

Es hat sich gezeigt, daß durch die Temperaturbehandlung zwischen 400°C und der Transformationstemperatur der für die Herstellung vorgebundenen Mineralfaserplatte verwendeten Mineralfasern ein bemerkenswert hoher Anstieg der Druck- und Biegefestigkeitswerte sowie des Elastizitätsmoduls von durchschnittlich 30 bis 45% gegenüber den Werten bei der nicht in der temperaturbehandelnden Platten eingetreten ist.

Dabei wurde auch festgestellt, daß dieser unerwartet hohe Festigkeitsanstieg nur bei Anwendung von Temperaturen unterhalb des Transformationspunktes der zur Herstellung der Ausgangsplatten verwendeten Mineralfasern feststellbar ist. Bei dem als Ausführungsbeispiel gewählten Basaltfasern betrug diese Umwandlungstemperatur 620 bis 640°C. Wurde diese Temperatur überschritten, dann ergab sich eine deutliche Verschlechterung der Plattenfestigkeit, insbesondere in Bezug auf Biegefestigkeit und Elastizitätsverhalten.

Diese Verminderung der Festigkeitseigenschaften ist darauf zurückzuführen, daß infolge von Oxidation der Mineralfasern, bei der eine Umwandlung des in den Fasern vorhandenen $FeO$ in $Fe_2O_3$ stattfindet, eine weitgehende Versprödung der Fasern eintritt und damit die eigentliche Funktion der Fasern, als Gerüst der Bauplatte eine hohe Biege- und Zugfestigkeit sowie Elastizität zu verleihen, verloren geht. Die Umwandlung des Eisenoxids unter Einfluß von Luft-sauerstoff ist stark temperaturabhängig und verläuft besonders intensiv bei Erreichen des Transformationspunktes, bei welchem die Faser erweicht.

Diese unerwünschte Oxidationsreaktion bei der Behandlung der mit Bindeton aufgefüllten Mineralfaserplatten im genannten Temperaturbereich, läßt sich in weiterer Ausbildung der Erfindung dadurch praktisch vollständig beseitigen, wenn man die Temperaturführung und Verweilzeit weiter so abstimmt, daß einerseits die Abspaltung des Kristallwassers aus dem Bindeton nahezu vollständig erfolgt ist und andererseits der Kohlenstoff, der sich als Rückstand aus der Verbrennung der organischen Bestandteile bei der Temperaturbehandlung zwischen 400 und 650°C bildet, noch nicht völlig ausgebrannt ist. Man kann diese Erscheinung noch dadurch verbessern, daß die Temperaturbehandlung in diesem Temperaturbereich in einer reduzierenden Atmosphäre erfolgt, d.h. durch entsprechende Einstellung der Flamme bei Gas oder Heizöl betriebenen Öfen oder bei Aufstellung eines Gefäßes mit pulverförmigen Graphit oder von Graphitstäben in dem Ofenraum bei Verwendung von elektrisch beheizten Öfen.

In weiterer Ausbildung der Erfindung kann die durchtränkte Platte vor dem Trocknen örtlich einer nochmaligen Durchtränkung unterworfen werden, wobei diese nochmalige Durchtränkung vorteilhaft an den Rändern der Platte durchgeführt wird. Man erhält im Bereich der doppelten Durchtränkung nach dem Trocknen und der Wärmebehandlung bei Temperaturen über 400°C, jedoch unterhalb der Transformationstemperatur der für die Herstellung der vorgebundenen Mineralfaserplatte verwendeten Mineralfasern verstärkte Bereiche, die zur Aufnahme von Nagelungen, zum Einfräsen von Nuten, Herausarbeiten von Federn oder Zinken und dergleichen, dienen können. Auf diese Weise kann man insbesondere and den Rändern Formgebungen vornehmen, die den unmittelbaren Anschluß der einen Platte mit der nachfolgenden Platte und eine vollständige Abdichtung etwaiger Spalten ermöglichen und darüber hinaus die Festigkeit eines solchen Plattenverbundes erhöhen.

Geht man in weiterer Ausbildung der Erfindung von einer doppelt starken Platte aus und spaltet diese nach dem Tränken, Trocknen und Tempern in zwei Platten, so erhält man zwei Platten mit jeweils einer glatten und einer rauhen Oberfläche. Die glatte Oberfläche ist unmittelbar tapezierbar, während die rauhe Oberfläche gut verputzt werden kann. Auf diese Weise entsteht eine Platte mit zwei Möglichkeiten der Oberflächenverkleidung was im Bauwesen von besonderem Vorteil ist.

Mann kann ausgehend von einer wenigstens annähernd doppelt starken Platte das Spalten derselben in zwei Platten auch vor dem Tränken vornehmen und erhält dadurch den Vorteil, daß der Tränkungsprozeß, sofern die Spaltseite beim Tränken nach oben zu liegen kommt, erleichtert wird.

Schließlich kann in weiterer Ausbildung der Erfindung das Tocknen durch Mikrowellenbestrahlung erfolgen. Dadurch vermeidet man einen Trocknungsgradienten von außen nach innen, wie er zwangsläufig beispielsweise beim Trocknen mit Warmluft auftritt. Man erreicht vielmehr ein Trocknen von innen nach außen und damit eine gleichmäßrige Struktur der fertigen Platte.

Im folgenden soll die Erfindung anhand von Ausführungsbeispielen näher erläutert werden. Bei allen Beispielen ist Bindeton mit einer Korngrößenverteilung von 80% unter 2 $\mu$m verwendet.

## Beispiel I

In eine Mineralfaserbahn aus Basalt in der Breite von 120 cm und mit einem Flächengewicht von 5kg/m² wurde kontinuierlich im Schachtverfahren eine wässrige Phenol-Formaldehydharzlösung mit 4,5 Gew.-% Feststoffgehalt gleichmäßig eingesprüht. Die Menge des eingesprühten Bindemittels betrug 4,2 kg/m².

Die feuchte Faserbahn wurde sodann in einer Plattenmaschine zwischen zwei perforierten Metallbändern auf eine Dicke von 25 mm zu einer Platte verpreßt und gleichzeitig mit Heißluft von 200 bis 220°C getrocknet und ausgehärtet. Die so hergestellte Platte hatte eine Dichte von 0,2 g/cm³. Der Harzgehalt betrug 3,6 Gew.-% Feststoff, bezogen auf das Gewicht der Platte.

Unmittelbar nach dem Verlassen der Plattenmaschine wurde der so erzeugte Plattenstrang in eine Überflutungsvorrichtung geleitet, wo mit Hilfe von an der Unterseite der Platten angelegten Unterdruck eine wässrige Bindetonsuspension in die Mineralfaserplatten von oben eingesaugt wurde, bis die Platte vollständig gesättigt war. Die imprägnierte Platte wurde anschließend auf einem Transportband in einen Trockenofen geleitet und dort mit Umluft von 200°C getrocknet. Anschließend wurde sie 10 Minuten bei 580°C bzw. 20 Minuten bei 480°C in einem mit Erdgas beheizten Ofen bei reduzierender Flamme erhitzt.

### Beispiel II

Eine mit Harz vorgebundene Mineralfaserplatte, die mit der Bindetonsuspension gesättigt war, wurde vor dem Trocknen noch über einen Absaugkasten geleitet, wo der Bindetonüberschuß aus den Faserhohlräumen der Platte durch Anlegen von Unterdruck entfernt wurde. Ansonsten wurde das Verfahren wie in Beispiel I geführt.

### Beispiel III

Die mit Bindetonsuspension gesättigte Platte wurde zwischen zwei Druckwalzen geführt, wobei der Überschuß der Tonsuspension nahezu vollständig aus der Platte herausgepreßt wurde.

Im übrigen wurde das Verfahren nach Beispiel I geführt.

Bei der Führung des Verfahrens nach Beispiel II und Beispiel III konnte die zu verdampfende Wassermenge bei der Trocknung der Platten erheblich gesenkt und damit die Trocknungszeit wesentlich verkürzt werden.

Bei allen drei Ausführungsbeispielen wurde die eingesetzte Bindetonsuspension durch Aufschlämmen eines pulverförmigen bzw. stückigen Bindetones der Type FC der Firma Didier aus Grünstadt in Wasser in einem Turbomischer hergestellt. Durch Zusetzen von Natriumpolyphosphatsalzen als Verflüssigungsmittel wurde die Viskosität der Suspension auf 6 bis 12 mPas eingestellt. Der erwähnte Bindeton der Type FC der Firma Didier aus Grünstadt hatte folgende Korngrößenverteilung

80% der Teilchen unter 2 $\mu$m
85% der Teilchen unter 3,5 $\mu$m
90% der Teilchen unter 6 $\mu$m
95% der Teilchen unter 15 $\mu$m.

Die Feststoffkonzentration der Suspension lag zwischen 15 und 60 Gew.-% und wurde gewählt:
—in Abhängigkeit von angestrebten Raumgewichten des Endproduktes
—in Abhängigkeit davon, ob nach dem Auffüllen der Platte mit der Bindetonsuspension der Überschuß aus der Platte abgesaugt werden sollte oder nicht.

Die Tabelle 1 zeigt eine Zusammenstellung verschiedener Verfahrensführungen und der erzielbaren bzw. erzielten Werte, wobei eine ins einzelne gehende Beschreibung dieser Tabelle wegen der detaillierten Angaben der Verfahrensschritte und der entsprechenden Werte nicht erforderlich ist.

TABELLE 1

| Raumgewicht der Bauplatte | kg /m³ | 300 | | 450 | | 600 | | 700 | | 800 | | 900 | |
|---|---|---|---|---|---|---|---|---|---|---|---|---|---|
| Herstellungsverfahren d.Platte *) | | abges. | nicht abges. | abges. | nicht abges. | abges. | nicht abges. | abges. | nicht abges. | abges. | nicht abges. | abges. | nicht abges. |
| A. *Auffüllung der mit Harz gebundenen Mineralfaserplatte mil einer Dichte von 200 kg/m³* | | | | | | | | | | | | | |
| Festoffgehalt der Tonsuspension | Gew % | 22 | 10,7 | 35 | 22,7 | 46 | 33,6 | 49 | 38,6 | 52 | 43,5 | 55 | 50 |
| Spez. Gewicht der Tonsuspension | g /cm³ | 1,16 | 1,07 | 1,27 | 1,16 | 1,38 | 1,25 | 1,43 | 1,3 | 1,47 | 1,35 | 1,51 | 1,44 |
| benotigte Menge Tonsuspension für 1m³ Platten | kg | 500 | 1028 | 757 | 1150 | 935 | 1274 | 1082 | 1360 | 1221 | 1448 | 1336 | 1540 |
| B. *Trocknen der mit Tonsuspension aufgefüllten Faserplatte* Zu verdampfende Wassermenge bei der Trocknung von 1m³ Platten in 25 mm Dicke | kg | 390 | 917 | 492 | 889 | 505 | 854 | 552 | 835 | 586 | 818 | 601 | 770 |
| Dickenschrumpfung der Platten bei der Trocknung bei 200°C | % | 2 | 3 | 4 | 5 | 7 | 9 | 9 | 11 | 11 | 13 | 14 | 14 |
| Raumgewicht der getrockneten Platte | kg /m³ | 310 | 310 | 475 | 470 | 640 | 640 | 750 | 750 | 860 | 860 | 970 | 970 |
| Druckspannung der getrockneten Platte, bei 10 % Stauchung | N /mm² | 0,14 | 0,19 | 0.27 | 0,35 | 0,49 | 0,60 | 0,80 | 0,88 | 1,20 | 1,29 | 1,89 | 2,15 |
| Biegefestigkeit der getrockneten Platte | N /mm² | 0,49 | 0,83 | 1,37 | 1,67 | 2,60 | 2,80 | 3,29 | 3,63 | 4,12 | 4,37 | 5,4 | 6,08 |

## TABELLE 1 (Fortsetzung)

| Raumgewicht der Bauplatte | kg /m³ | 300 | | 450 | | 600 | | 700 | | 800 | | 900 | |
|---|---|---|---|---|---|---|---|---|---|---|---|---|---|
| Herstellungsverfahren d.Platte *) | | abges. | nicht abges. | abges. | nicht abges. | abges. | nicht abges. | abges. | nicht abges. | abges. | nicht abges. | abges. | nicht abges. |
| **C.** *Tempern der aufgefüllten und getrockneten Faserplatte* | | | | | | | | | | | | | |
| Gewichtsverlust der getrockneten Platte beim Temperprozeß, 10 min bei 580°C | Gew % | 4 | 4 | 5 | 5 | 6 | 6 | 6,5 | 6,5 | 7 | 7 | 7,5 | 7,5 |
| Druckspannung der getemperten Platte, bei 10 % Stauchung | N /mm² | 0,17 | 0,25 | 0,35 | 0,51 | 0,74 | 1,10 | 1,26 | 1,62 | 1,95 | 2,27 | 2,73 | 2,99 |
| Biegefestigkeit der getemperten Platte | N /mm² | 0,69 | 0,88 | 1,81 | 2,26 | 3,29 | 3,83 | 4,42 | 5,00 | 5,54 | 6,18 | 7,26 | 7,95 |

*) Bedeutung der Angaben in Spalte :

abges. = Platten mit Tonsuspension gesättigt, und mit einem Unterdruck von 4000 — 5000 Pas abgesaugt

nicht abges. = Platten mit Tonsuspension gesättigt, nicht abgesaugt

## Patentansprüche

1. Verfahren zur Herstellung von Isolierbauplatten, bei dem eine mit einem organischen Bindemittel auf Kunststoffbasis vorgebundene Mineralfaserplatte mit einer wässrigen Aufschlämmung aus einem anorganischen Bindemittel getränkt und anschließend warm getrocknet wird, dadurch gekennzeichnet, daß ausgehend von einer mit einem organischen Kunststoffbindemittel vorgebundenen Mineralfaserplatte mit einer Dichte von mindestens 0,15, vorzugsweise 0,2 g/cm³, diese Mineralfaserplatte mit einer wässrigen Aufschlämmung eines Bindetons, dessen Teilchengröße zu mindestens 80%, vorzugsweise 90% unter 2 $\mu$m liegt und der im Temperaturbereich von 400°C bis 640°C sein chemisch gebundenes Wasser abspaltet, völlig durchtränkt und nach dem Trocknen bei Temperaturen über 105°C bei Temperaturen über 400°C, jedoch unterhalb der Transformationstemperatur der für die Herstellung der vorgebundenen Mineralfaserplatte verwendeten Mineralfasern getempert wird.

2. Verfahren nach Anspruch 1, dadurch gekennzeichnet, daß als Ausgangsmaterial für die Mineralfaserplatte ein solches mit maximalen Faserdurchmessern von 6 $\mu$m verwendet wird.

3. Verfahren nach Anspruch 1 oder 2, dadurch gekennzeichnet, daß der Tempervorgang in reduzierender Atmosphäre durchgeführt wird.

4. Verfahren nach einem oder mehreren der vorhergehenden Ansprüche, dadurch gekennzeichnet, daß der verwendete Bindeton hauptsächlich aus folgenden Mineralien besteht

25 bis 80 Gew.-% Kaolinit

0 bis 50 Gew.-% Illit und Serizit

10 bis 37 Gew.-% Quarz.

5. Verfahren nach Anspruch 4, dadurch gekennzeichnet, daß die Zusammensetzung des verwendeten Bindetons im Bereich folgender Gewichtsanteile liegt:

48 —62    Gew.-% $SiO_2$

25 —35    Gew.-% $Al_2O_3$

0,8— 2    Gew.-% $TiO_2$

0,8— 2,2 Gew.-% $Fe_2O_3$

0,6— 2    Gew.-% $CaO$

0,4— 1,5 Gew.-% $MgO$

0,5— 2,5 Gew.-% $K_2O$

0,1— 1,5 Gew.-% $Na_2O$

5 —15    Gew.-% organische Stoffe und Kristallwasser.

6. Verfahren nach einem oder mehreren der vorhergehenden Ansprüche, dadurch gekennzeichnet, daß die durchtränkte Platte vor dem Trocknen örtlich einer nochmaligen Durchtränkung unterworfen wird.

7. Verfahren nach Anspruch 6, dadurch gekennzeichnet, daß die nochmalige Durchtränkung an den Rändern der Platte durchgeführt wird.

8. Verfahren nach einem oder mehreren der vorhergehenden Ansprüche, dadurch gekennzeichnet, daß von einer doppelt starken Platte ausgegangen und diese nach dem Tränken, Trocknen und Tempern in zwei Platten gespalten wird.

9. Verfahren nach einem oder mehreren der Ansprüche, 1 bis 7 dadurch gekennzeichnet, daß von einer doppelt starken Platte ausgegangen und diese vor dem Tränken in zwei Platten gespalten wird.

10. Verfahren nach einem oder mehreren der vorhergehenden Ansprüche, dadurch gekennzeichnet, daß das Trocknen durch Mikrowellenbestrahlung erfolgt.


## Revendications

1. Procédé pour la fabrication de panneaux de construction isolants dans lequel un panneau en fibres minérales lié préalablement avec un liant organique à base de résine est imprégné d'une suspension aqueuse d'un liant inorganique et ensuite séché à chaud, caractérisé en ce que, partant d'un panneau en fibres minérales lié préalablement avec un liant de résine organique et d'une densité d'au moins 0, 15, de préférence de 0,2 g/cm³, ce panneau en fibres minérales est trempé complètement dans une suspension aqueuse d'une argile agglomérante dont la granulométrie à au moins 80%, de préférence à 90% se trouve au-dessous de 2 microns et qui libère son eau liée chimiquement dans un intervalle de température compris entre 400°C et 650°C, et après le séchage à des températures au-dessus de 105°C est cuit à des températures au-dessus de 400°C mais en-dessous de la température de transformation des fibres minérales utilisées pour la fabrication du panneau en fibres minérales préalablement lié.

2. Procédé selon la revendication 1, caractérisé en ce qu'en tant que matériau de départ pour le panneau de fibres minérales on utilise un tel matériau avec des diamètres maxima de fibres de 6 microns.

3. Procédé selon la revendications 1 ou 2, caractérisé en ce que l'opération de cuisson est effectuée en atmosphère réductrice.

4. Procédé selon l'une ou plusieurs des revendications précédentes, caractérisé en ce que l'argile agglomérante utilisée consiste essentiellement dans les minéraux suivants:

25—80% en poids de Kaolinite

0—50% en poids d'Illite ou Serizite

10—37% en poids de Quartz

5. Procédé selon la revendication 4, caractérisé en ce que la composition de l'argile agglomérante se situe dans la gamme des pourcentages en poids suivante:

48 —62 % en poids $SiO_2$

25 —35 % en poids $Al_2O_3$

0,8— 2 % en poids $TiO_2$

0,8— 2,2 % en poids $Fe_2O_3$

0,6— 2 % en poids CaO

0,4— 1,5 % en poids MgO

0,5— 2,5% en poids $K_2O$

0,1—1,5 % en poids $Na_2O$

5 —15 % en poids matières organiques et eau de cristallisation

6. Procédé selon l'une ou plusieurs des revendications précédentes, caractérisé en ce que le panneau trempé est, avant le séchage, soumis localement à un tempage répété.

7. Procédé selon la revendication 6, caractérisé en ce que le trempage répété est effectué sur les bords du panneau.

8. Procédé selon l'une ou plusieurs des revendications précédentes, caractérisé en ce que l'on part d'un panneau d'épaisseur double qui est fendu, après trempage, séchage et cuisson, en deux panneaux.

9. Procédé suivant l'une ou plusieurs des revendications 1 à 7 caractérisé en ce que l'on part d'un panneau d'épaisseur double que l'on fend, avant trempage, en deux panneaux.

10. Procédé suivant l'une ou plusieurs des revendications précédentes, caractérisé en ce que le séchage est effectué par rayonnement à micro-ondes.

## Claims

1. A process for making insulating construction boards in the case of which a mineral fiber board, which has undergone pre-binding with an organic binder on a synthetic resin basis, is soaked in a water slurry of an inorganic binder and is then dried while hot, characterized in that starting with a mineral fiber board, which has undergone pre-binding with an organic synthetic resin binder and having a density of at least 0.15 and, more specially, 0.2 g/cc, the mineral fiber board is completely soaked with a water suspension of binder clay, whose particle size is for at least 80% and, more specially for 90% under 2 microns and having the property of giving up its chemically bound water between 400°C and 650°C, and after drying at over 105°C, at over 400°C but under the transformation temperature of the mineral fibers used for producing the pre-bound mineral fiber board, is tempered.

2. A process as claimed in claim 1, characterized in that the starting material for the mineral fiber board has an upper fiber diameter limit of 6 microns.

3. A process as claimed in claim 1 or claim 2, characterized in that the tempering operation is undertaken in a reducing atmosphere.

4. A process as claimed in anyone or more of claims 1 to 3, characterized in that the binder clay used is mainly made up of:

25 to 80% by weight of kaolinite

0 to 50% by weight of illite or sericite

10 to 37% by weight of quartz.

5. A process as claimed in claim 4, characterized by the binder clay being within the analysis range of:—

48 —62 % by weight of $SiO_2$

25 —35 % by weight of $Al_2O_3$

0.8— 2 % by weight of $TiO_2$

0.8— 2.2 % by weight of $Fe_2O_3$

0.6— 2 % by weight of CaO

0.4— 1.5% by weight of MgO

0.5— 2.5% by weight of $K_2O$

0.1— 1.5% of $Na_2O$

5 —15 % by weight of organic materials and water of crystallization.

6. A process as claimed in anyone or more of claims 1 to 5, characterized in that the soaked board undergoes further soaking on giving parts of it before drying.

7. A process as claimed in claim 6, characterized in that the further soaking operation is undertaken at the edges of the board.

8. A process as claimed in anyone or more of claims 1 to 7, characterized in that the starting board is a double thickness board, which undergoes division into two boards after soaking, drying and tempering.

9. A process as claimed in anyone or more of claims 1 to 7, characterized in that the starting board is a double thickness board which undergoes division into two boards before soaking.

10. A process as claimed in anyone or more of claims 1 to 9, characterized in that drying is undertaken by microwave radiation.